# EUROPEAN PATENT SPECIFICATION

(11) **EP 2 441 887 B1**
(45) Date of publication and mention of the grant of the patent: **14.10.2015**
(21) Application number: 10187752.0
(22) Date of filing: 15.10.2010
(51) Int. Cl.: E01C 7/26, E01C 7/32, E01C 11/16

(54) **Heat-resistant road paving and relative manufacturing process**
Wärmebeständiger Strassenbelag und Herstellungsverfahren
Revêtement de route thermorésistant et procédé de fabrication

(43) Date of publication of application: 18.04.2012
(73) Proprietor: Impresa Bacchi S.r.l., 20097 San Donato Milanese (Milan) (IT)
(72) Inventor: Bacchi, Mauro, 20080 Carpiano (MI) (IT); Da Rios, Giovanni, 20133 Milano (IT); Crispino, Maurizio, 20133 Milano (IT); Toraldo, Emanuele, 20133 Milano (IT); Fiori, Federico, 20133 Milano (IT); Bacchi, Matteo Giorgio, 20133 Milano (IT)
(74) Representative: Bottero, Carlo

(56) References cited:
- EP-A1- 0 919 667
- WO-A1-02/075052
- WO-A2-2009/021040
- JP-A- 2 085 405

## Description

The present invention concerns a heat-resistant road paving and the relative manufacturing process.

In the field of road infrastructure construction, heat-resistant properties of road pavings are of crucial importance for ensuring high safety and environment protection standards.

The possibility of producing road surfaces that are heat-resistant has particular importance in the construction of pavings for road tunnels, inside which, in the case in which there is an accident resulting with a fire, even very high temperatures can be reached (up to about 1000°C).

In such emergency situations it is important for all the structural elements of a tunnel, including the paving, to be capable of resisting high temperatures so as to facilitate the evacuation of the people involved in the accident and the intervention of emergency services.

Just as important, in the case of fire, is the possibility of preventing the road paving itself from becoming a further fuel. Indeed, a burning paving, generating further heat, can damage the equipment of the tunnel and the safety systems, jeopardising both the evacuation of the people as well as the intervention of emergency services.

The road pavings known in the state of the art are generally produced by using asphalt concrete of various types or concrete blocks.

In the case of pavings in tunnels, asphalt concrete, however, has the drawback of being inflammable at relatively low temperatures (about 450-500°C) when compared to those generated by a fire. Moreover, such pavings can easily be deformed by effect of the heat. The combustion of the bituminous fraction, moreover, produces toxic and polluting fumes, as well as increasing the quantity of heat generated by the fire.

For the specific application of pavings for tunnels, the use of concrete blocks has also recently been proposed.

Concrete pavings represent a more suitable solution for the problem of resistance to heat loads. Concrete, is indeed a material characterised by greater inertia, stability and fire resistance and, therefore, it is able to ensure the transit of vehicles during fires, as well as not generating harmful emissions.

The manufacture of pavings in concrete, however, is onerous from the constructive point of view, especially as far as pre-existing tunnel maintenance is concerned.

Therefore, this solution only has a limited application at the moment in the field of new road infrastructure construction.

WO 02/075052 discloses a reinforced semiflexible pavement comprising a porous asphalt concrete layer filled in with a cement mortar, said layer being coupled with a reinforcement, in form of nets or mesh, made of a modified polymer.

EP 0919667 A1 discloses a road pavement structure comprising a concrete base layer, a paving layer and a surface layer. The paving layer consists of a porous asphalt concrete, whereas the surface layer comprises a cement concrete. The cement concrete penetrates only partly into the pores of the paving layer (par. 66; p. 4, 1. 1-2). WO 2009/021040 A2 discloses a road pavement structure comprising an asphalt concrete surface layer coupled with a reinforcing layer consisting of a glass fibers grid.

The above-mentioned patent applications disclose inventions which try to solve the technical problem of improving the mechanical properties of a road paving, such as its load-bearing capacity or durability. These documents do not address the technical problem of improving the heat resistance of a road paving.

The purpose of the present invention is that of

The purpose of the present invention is that of overcoming the drawbacks highlighted by the state of the art.

A first object of the present invention is a heat-resistant road paving with the features of claim 1.

A second object of the present invention is a process for manufacturing the aforementioned heat-resistant paving according to claim 9 comprising the following operative steps:
a) applying a polymeric grid onto a roadbed;
b) making a layer of highly porous asphalt concrete on said polymeric grid;
c) filling the pores of said asphalt concrete through injection of a cement mortar, forming a surface layer of asphalt concrete filled in with a cement mortar.

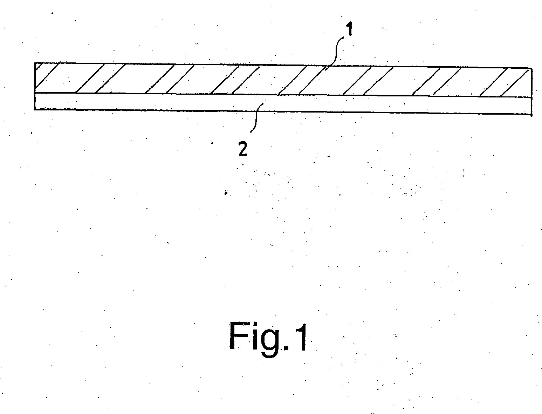

The present invention is described with reference to figure 1, which illustrates a schematic representation of a heat-resistant paving according to the present invention in which 1 is a surface layer of highly porous asphalt concrete filled in with cement mortar, with added polymeric fibres and 2 is a polymeric grid.

The road paving according to the present invention comprises a surface layer 1 of a highly porous asphalt concrete, also defined as "open graded" type asphalt, in which the pores are filled in with cement mortar.

The cement mortar is added with polymeric fibres.

The thickness of the surface layer 1 is of between 6 and 10 cm, preferably 8 cm.

The highly porous asphalt concrete is made by suitably proportioning the pieces of the stone component, i.e. by using stone aggregates and fillers so as to obtain a very discontinuous granule size.

In accordance with the present invention, the aforementioned asphalt concrete comprises fillers and a mixture of stone aggregates, possibly of different mineral compositions, such as siliceous, calcareous or basalt aggregates.

The discontinuity of the granule size of the mixture of stone aggregates is obtained by suitably proportioning coarse aggregates, fine aggregates and optionally aggregates belonging to the granule size classes of fine crushed aggregates, sands and fine sands.

The coarse aggregates have a continuous granule size distribution within the range of between 20 mm and 8 mm (according to the series ISO 3310-1 and 3310-2). The maximum diameter of the aggregate is in the range of between 20-12 mm and is selected by the man skilled in the art according to the thickness of the surface layer 1.

The fine aggregates have continuous granule size distribution within the range of between 2 mm and 0.075 mm (according to the series ISO 3310-1 and 3310-2).

Preferably, the discontinuity of the mixture of stone aggregates is obtained by exclusively mixing coarse and fine aggregates, i.e. not including aggregates belonging to the granule size classes relative to fine crushed aggregates, to sands and to fine sands, i.e. stone aggregates with a diameter of between 8 mm and 2 mm (according to the series ISO 3310-1 and 3310-2). In such a case the ratio by weight between the coarse aggregates and the overall weight of the mixture of anhydrous stone aggregates varies from 70% to 80%, whereas the ratio by weight between the fine aggregates and the overall weight of the mixture of anhydrous stone aggregates thus varies from 20% to 30%.

In the case in which also granule size classes of fine crushed aggregates, of sands and of fine sands are used, these classes are present in the mixture of stone aggregates in an amount of between 0% and 15% by weight with respect to the weight of the mixture of the anhydrous stone aggregates. In particular, when the fine crushed aggregates, the sands and the fine sands are present in amounts of between 10 and 15% by weight with respect to the weight of the mixture of anhydrous stone aggregates, the coarse aggregates are present in amounts that can vary between 65 and 70% by weight with respect to the weight of the mixture of anhydrous stone aggregates.

The filler, contained in a quantity comprised between 2 and 4% by weight of the mixture of anhydrous stone aggregates, is without distinction calcareous or cement.

The bitumen is of the non modified type and is used in amounts such as to ensure the sole covering of the mixture of stone aggregates. Preferably the bitumen in the surface layer 1 is present in an amount which can vary between 2.5% and 3.5% by weight with respect to the weight of the mixture of anhydrous stone aggregates. The class of the bitumen to be used is selected by the man skilled in the art according to the climate characteristics of the place in which it is applied; for example, in temperate climates like the Mediterranean climates, bitumen belonging to the classes 50-70 and 70-100 are preferred (as defined by the standard UNI EN 12591:2002).

The layer of asphalt concrete is laid on the road foundations through the methods of laying with vibratory finishing machine and road roller known in the state of the art.

The cement mortar is of the hyperfluid type because of the presence of fluidifying agents in the cement powder and it is made on the working site by dosing a water content equal to about 1/3 of the weight of the cement powder. The amount of cement mortar used in the layer 1 can vary from 25 to 35% by volume with respect to the overall volume of the laid asphalt concrete.

The fibres added to the cement mortar are dosed in an amount of between 0.15 kg/mc and 0.45 kg/mc of wet cement mortar, i.e. in an amount of between 0.5 kg/mc and 1.5 kg/mc of finished paving.

The fibres are added while the cement mortar is mixed.

For the purpose of the present invention the polymeric fibres generally used in the field of civil constructions can be used.

Indeed, in the field of civil constructions, different types of fibre are used according to the function they must carry out; fibres made from different materials are available on the market, such as polymers (e.g. polypropylene, polyacrylonitrile, polyester), glass, cellulose.

According to the present invention the fibres to be used are polymeric and preferably made from polypropylene.

Preferably, the polymeric fibres (made from polypropylene or other polymer) are characterised in that they have a length variable between 5 mm and 25 mm, a minimum nominal diameter greater than or equal to 10 micron and a melting point of no higher than 200°C, measured according to the ASTM D7138-08.

The filling of the asphalt concrete pores is made by means of injections of fluid cement mortar, possibly with added polymeric fibres, according to the techniques and with the equipment known by a man skilled in the art.

The filling makes it possible to obtain a surface layer having a stone skeleton, made up of granules of aggregates bound by means of the bituminous component, enclosed in a cementitious matrix possibly containing polymeric fibres.

This particular structure combination of asphalt concrete and cement mortar, with added polymeric fibres, gives the paving high mechanical and heat-resistant properties, at the same time ensuring a reduction of the harmful fumes in the case in which there is a fire. In particular, thanks to such a structure, there is not the problem of the generation of harmful and polluting emissions during the useful life of the paving.

In particular, the polymeric fibres ensure a higher fire-resistance of the paving with respect to the paving made from cement mortar without added polymeric fibres itself. Indeed the fibres, having a low melting point, melt at temperatures of between 1/5 and 1/4 of those typical of tunnel fires. When melting, such fibres free spaces inside the paving, promoting the dissipation of the thermal tensions generated by the fire on the paving and preventing pull-out phenomena, typical of materials with a cementitious matrix.

As far as the durability of the paving over time is concerned, this is ensured by the presence of the cement mortar, which, moreover, limits crumbling phenomena related to the presence of solvents (oils) or to mechanical actions (braking, acceleration of a vehicle).

Preferably, in the paving object of the present invention the surface layer 1 has the following composition by volume: 20-30% of cement mortar, possibly with added polymeric fibres, 70-80% of highly porous asphalt concrete and 1-3% of empty space (measured according to the standard UNI EN 12697-8:2003).

The surface layer 1 of the road paving according to the present invention is coupled with a polymeric grid 2, of the orthotropic type, with stiffening fibreglass along a preferential direction.

The polymeric grid 2, known in the state of the art and currently used in civil constructions, is made up of bidirectional polymeric fabric (for example polypropylene or polyester) and of a stiffening in fibreglass along one direction, all impregnated with distilled bitumen modified with plastomers and/or elastomers.

Preferably, according to the present invention, the impregnating modified distilled bitumen is present in an amount of between 1.0 kg/mq and 1.5 kg/mq of polymeric grid (measured according to ASTM D6140-97), whereas the polymer and the fibreglass have continuous filaments. Preferably, the polymeric fabric is a polypropylene fabric.

Again in a preferred embodiment of the present invention, the polymeric grid 2 has traction resistance greater than 10 kN/m (according to the ISO 10319) in the direction of warp of just the polymeric fibre and traction resistance greater than 50 kN/m (ISO 10319) in the direction in which the polymeric and glass fibres are coupled.

This allows the polymeric grid 2 to take up an orthotropic behaviour, i.e. to ensure an increase of the performances along the direction of movement of the vehicles, where as well as the continuous polymeric fibre there is also fibreglass. This makes it possible for the polymeric grid 2 to have greater stiffness in the direction of movement of the vehicle, so as to limit the accumulation of permanent deformations (rutting) on the paving.

Thanks to the different directional stiffness, the polymeric grid 2 is also capable of absorbing and distributing the cutting and traction stress due to the stopping and movement of vehicles.

Moreover, through its deformation, the polymeric grid 2 also acts as a barrier against the rising up to the surface of possible cracking of the underlying layers, typically caused by the presence of water in the subsurface or by breaking from stress of possible underlying bound layers (with bitumen or cement).

The polymeric grid 2 is applied to the roadbase through the techniques known in the state of the art, making sure to overlap possible joins and to eliminate possible non-flatness of the grid itself.

Preferably, the polymeric grids used for manufacturing the paving object of the present invention are adhesive grids. Normally they have a surface, the one in contact with the roadbed or with the pre-existing layer, impregnated in a suitable adhesive and the other thermoadhesive surface, characterised in that it generates its adhesive properties in contact with the heat of the asphalt concrete during its laying.

In the case in which the polymeric grid 2 is not of the adhesive type, in the manufacture of the paving object of the present invention it is preferable to apply, between the surface layer 1 and the polymeric grid 2 a first prime-coat made up of a cationic bitumen emulsion, in which the bitumen is modified with SBS polymer.

It is just as preferable to apply a second prime-coat of the same bitumen emulsion also between the roadbase and the polymeric grid 2.

The prime-coat is applied through the continuous spraying technique known by a man skilled in the art.

Therefore, the process object of the present invention can comprise, as well as the steps a) - c), also the following operative steps:
a1) before step a), applying a first prime-coat of cationic bitumen emulsion onto the roadbed, in which the bitumen is modified with SBS polymer;
a2) after step a) and before step b), applying a second prime-coat of cationic bitumen emulsion onto the polymeric grid (2), in which the bitumen is modified with SBS polymer.

The prime-coat is laid in an amount of between 1.0 kg/mq and 2.0 kg/mq of surface covered between the existing roadbed and the polymeric grid 2 (first coat) and in an amount of between 0.5 kg/mq and 1.5 kg/mq between the polymeric grid 2 and the surface layer 1 (second coat).

The application of the bitumen emulsion offers the further advantage of absorbing the cutting and traction stress due to the stopping and movement of vehicles and transferring them to the roadbase without mutual sliding both between said roadbed and the polymeric grid 2 as well as between said polymeric grid 2 and the surface layer 1.

The road paving according to the present invention can be made on different types of roadbase. Thanks to the stiffness and deformability characteristics, which are intermediate between those of the conglomerates bound with bitumen and those of the conglomerates bound with cement, the paving according to the present invention and the relative manufacturing process are particularly suitable for covering surfaces consisting of concrete slabs, foundations bound with cement (cement mixtures) and non bound foundations (granular mixtures) or surfaces in asphalt concrete. This is due, in particular, to the fact that the deformability of the paving object of the present invention is compatible with that of the materials that form the aforementioned roadbeds.

As mentioned, the filling of the pores of the asphalt concrete is obtained by means of injections of fluid cement mortar, possibly with added polymeric fibres, according to the methods known in the state of the art. The mixing of the cement powder with water (in weight ratio equal to about 1 to 3) is carried out in a suitable mechanical mixer provided with weight measuring devices. The same type of measuring device is used for adding the polymeric fibres during the mixing of the cement mortar.

Preferably, in the highly porous asphalt concrete obtained in step b) of the process according to the present invention, the weight of the bitumen with respect to the weight of the mixture of anhydrous stone aggregates is of between 2.5% and 3.5%.

Preferably, the cement mortar with added polymeric fibres, is injected in step c) of the process according to the present invention in a ratio by volume equal to 20-30% with respect to the volume of the laid asphalt concrete.

The aforementioned process is easy and rapid to carry out with the techniques and through the apparatuses known in the state of the art. It is, therefore, possible to apply it both for making new pavings as well as for maintaining existing pavings, where it is possible to also carry out localised restoration in thin layers (less than about 2 cm) by suitably varying the size of the granules of the stone aggregates.

There are many advantages offered by the present invention with respect to the state of the art.

The paving according to the present invention has a deformability for extended exposure to high temperatures and to direct flames comparable with those of concrete pavings.

However, the manufacturing process is definitely simpler with respect to that of concrete pavings and, therefore, suitable both for new constructions and for maintenance operations, especially in road tunnels where it is essential to reduce the laying time as much as possible.

The particular structure and composition of the paving according to the present invention, also, prevent harmful fumes and polluting emissions from forming after heating, with obvious advantages with respect to the use of conventional asphalt concrete.

These characteristics make the paving according to the present invention particularly suitable for making pavings of road tunnels, in which thanks to their use it is possible to increase the safety and environment protection standards.

The road paving object of the present invention and the relative manufacturing process, moreover, can be used to cover different types of roadbeds.

The following embodiment of the present invention is only provided for illustrative purposes and must not be taken to limit the scope of protection defined by the attached claims.

### Example 1

A heat-resistant road paving has been made in accordance with the present invention, with reference to the diagram of Figure 1, as described hereafter.

Surface layer 1 in porous asphalt concrete filled in with a cement mortar with added fibre, having the following characteristics:
- thickness equal to 8 cm;
- modulus of elasticity equal to 7000 MPa measured at the temperature of 20°C according to the standard UNI EN 12697-26:2004;
- ordinary non modified bitumen of class 50/70 according to the standard UNI EN 12591:2002;
- content of bitumen equal to 3% by weight with respect to the weight of the mixture of aggregates;
- content of cement fillers equal to 3% by weight with respect to the weight of the mixture of anhydrous stone aggregates;
- stone component, having discontinuous granule size of the "open graded" type, consisting of a mixture of siliceous, calcareous and basalt aggregates, having the following percentage composition (percentages referring to the overall weight of the mixture of anhydrous aggregates): 65% of coarse aggregates (diameter of between 20 mm and 8 mm according to the series ISO 3310-1 and 3310-2), 5% of aggregates belonging to the class of fine crushed aggregate, sand and fine sands (diameter of between 8 mm and 2 mm according to the series ISO 3310-1 and 3310-2), 30% of fine aggregates (diameter of between 2 mm and 0 mm according to the series ISO 3310-1 and 3310-2);
- hyperfluid cement mortar with added fibre in polypropylene in an amount equal to 33% by volume with respect to the overall volume of the surface layer 1; the mortar was obtained by mixing 350 g of water for each kg of cement powder; for each cubic metre of mortar 0.30 kg of polypropylene fibres with a length of 10 mm and a minimum nominal diameter of 20 micron, were added.
- composition by volume of the surface layer 1: 23% by volume of hyperfluid cement mortar with added fibre in polypropylene, 75% of highly porous asphalt concrete and 2% of empty space (measured according to the standard UNI EN 12697-8:2003).

Orthotropic polymeric grid 2 with fibreglass stiffening along a direction, having the following characteristics:
- grid made from polypropylene and glass fibres with continuous filaments;
- amount of impregnating bitumen equal to 1.5 kg/mq of surface of the grid (ASTM D6140-97);
- traction-resistance equal to 15 kN/m (ISO 10319) in the direction of warp of just the polymeric fibre;
- traction-resistance equal to 60 kN/m (ISO 10319) in the direction of warp in which the polymeric fibre and the fibreglass are coupled.

A first prime-coat, made with cationic bitumen emulsion was placed between the polymeric grid 2 and the roadbase, in which the bitumen is modified with SBS polymer, laid in an amount equal to 1 kg for each square metre of worked surface.

Between the surface layer 1 and the polymeric grid 2 there is a second prime-coat, made with cationic bitumen emulsion, in which the bitumen is modified with SBS polymer, laid in an amount equal to 2 kg for each square metre of worked surface.

Laboratory tests have highlighted a compression resistance of the surface layer 1, measured on cubic samples with sides 5 cm long after 120 minutes of exposure to a free flame of hydrocarbons with a temperature of about 400°C, intermediate between that detected on samples of asphalt concrete and concrete. A ratio equal to about 10 between the residual compression resistance (after exposure to a free flame) of the surface layer 1 and that of the asphalt concrete was detected. Such a ratio was also conserved between the resistances of concrete samples and those made with the material of the surface layer 1.

## Claims

1. Heat-resistant road paving comprising a surface layer (1) of a porous asphalt concrete filled in with a cement mortar, said layer being coupled with a polymeric grid (2), **characterised in that** said cement mortar is added with polymeric fibres and **in that** said asphalt concrete comprises a mixture of stone aggregates comprising:
- coarse aggregates having a continuous granule size distribution within the range between 20 mm and 8 mm;
- fine aggregates having a continuous granule size distribution within the range between 2 mm and 0.075 mm.

2. Paving according to claim 1, wherein the polymeric fibres have a variable length of between 5 mm and 25 mm, a minimum nominal diameter of greater than or equal to 10 microns and a melting point of no higher than 200°C.

3. Paving according to claim 1 or 2, wherein the polymeric fibres are polypropylene fibres.

4. Paving according to any one of claims 1 to 3, wherein the polymeric fibres are present in an amount of between 0.15 kg/mc and 0.45 kg/mc of wet cement mortar.

5. Paving according to any one of the previous claims, **characterised in that** the surface layer (1) has the following composition by volume: 20-30% cement mortar with added polymeric fibres, 70-80% highly porous asphalt concrete and 1-3% empty space.

6. Paving according to any one of the previous claims, wherein the asphalt concrete comprises aggregates with a diameter of between 8 mm and 2 mm.

7. Paving according to any one of the previous claims, wherein the polymeric grid (2) is an orthotropic grid with fibreglass stiffening along a preferential direction.

8. Paving according to any one of the previous claims, wherein the polymeric grid (2) is an adhesive grid.

9. Process for manufacturing road paving according to claim 1, comprising the following operative steps:
a) applying a polymeric grid (2) onto a roadbed;
b) making a layer of highly porous asphalt concrete on said polymeric grid (2), said asphalt concrete comprising a mixture of stone aggregates comprising:
- coarse aggregates having a continuous granule size distribution within the range between 20 mm and 8 mm;
- fine aggregates having a continuous granule size distribution within the range between 2 mm and 0.075 mm;
c) filling the pores of said asphalt concrete through injection of a cement mortar added with polymeric fibers forming a surface layer (1) of asphalt concrete filled in with a cement mortar.

10. Process according to claim 9, wherein the cement mortar is a cement mortar with added polymeric fibres having a variable length of between 5 mm and 25 mm, a minimum nominal diameter of greater than or equal to 10 microns and a melting point of no higher than 200°C.

11. Process according to claim 9 or 10 comprising, when the polymeric grid (2) is not an adhesive grid, the following further operative steps:
a1) before step a), applying a first prime-coat of cationic bitumen emulsion onto the roadbed, in which the bitumen is modified with SBS polymer;
a2) after step a) and before step b), applying a second prime-coat of cationic bitumen emulsion onto the polymeric grid (2), in which the bitumen is modified with SBS polymer.

## Patentansprüche

1. Wärmebeständiger Straßenbelag, der eine Deckschicht (1) aus einem mit einem Zementmörtel verfüllten offenporigen Asphaltbeton umfasst, wobei diese Schicht mit einem Polymergitter (2) verbunden ist, **dadurch gekennzeichnet, dass** der Zementmörtel mit Polymerfasern versetzt ist, und dadurch, dass der Asphaltbeton ein Gemisch aus Gesteinszuschlägen umfasst, das Folgendes umfasst:
- Grobzuschläge mit einer kontinuierlichen Korngrößenverteilung im Bereich zwischen 20 mm und 8 mm;
- Feinzuschläge mit einer kontinuierlichen Korngrößenverteilung im Bereich zwischen 2 mm und 0,075 mm

2. Belag nach Anspruch 1, wobei die Polymerfasern eine variable Länge zwischen 5 mm und 25 mm, einen Mindest-Nenndurchmesser größer oder gleich 10 Mikrometer und einen Schmelzpunkt von höchstens 200°C aufweisen.

3. Belag nach Anspruch 1 oder 2, wobei die Polymerfasern Polypropylenfasern sind.

4. Belag nach einem der Ansprüche von 1 bis 3, wobei die Polymerfasern in einer Menge zwischen 0,15 kg/m³ und 0,45 kg/m³ nassen Zementmörtels vorliegen.

5. Belag nach einem der vorhergehenden Ansprüche, **dadurch gekennzeichnet, dass** die Deckschicht (1) die folgende Zusammensetzung in Volumenprozenten aufweist: 20-30% Zementmörtel, versetzt mit Polymerfasern, 70-80% hochgradig offenporiger Asphaltbeton und 1-3% Leerraum.

6. Belag nach einem der vorhergehenden Ansprüche, wobei der Asphaltbeton Zuschläge mit einem Durchmesser zwischen 8 mm und 2 mm umfasst.

7. Belag nach einem der vorhergehenden Ansprüche, wobei das Polymergitter (2) ein orthotropes Gitter mit Glasfaserversteifung längs einer Vorzugsrichtung ist.

8. Belag nach einem der vorhergehenden Ansprüche, wobei das Polymergitter (2) ein Klebegitter ist.

9. Verfahren zum Herstellen eines Straßenbelags nach Anspruch 1, das die folgenden Arbeitsschritte umfasst:
a) Aufbringen eines Polymergitters (2) auf ein Straßenbett;
b) Herstellen einer Schicht aus hochgradig offenporigem Asphaltbeton auf dem Polymergitter (2), wobei der Asphaltbeton ein Gemisch von Gesteinszuschlägen umfasst, das Folgendes umfasst:
- Grobzuschläge mit einer kontinuierlichen Korngrößenverteilung im Bereich zwischen 20 mm und 8 mm;
- Feinzuschläge mit einer kontinuierlichen Korngrößenverteilung im Bereich zwischen 2 mm und 0,075 mm;
c) Füllen der Poren des Asphaltbetons durch Injektion eines mit Polymerfasern versetzten Zementmörtels und dadurch Ausbilden einer Deckschicht (1) aus mit Zementmörtel verfülltem Asphaltbeton.

10. Verfahren nach Anspruch 9, wobei der Zementmörtel ein Zementmörtel ist, der mit Polymerfasern versetzt ist, die eine variable Länge zwischen 5 mm und 25 mm, einen Mindest-Nenndurchmesser größer oder gleich 10 Mikrometer und einen Schmelzpunkt von höchstens 200°C aufweisen.

11. Verfahren nach Anspruch 9 oder 10, das, wenn das Polymergitter (2) kein Klebegitter ist, die folgenden weiteren Arbeitsschritte aufweist:
a1) vor Schritt a) Aufbringen einer ersten Grundierung aus kationischer Bitumenemulsion auf das Straßenbett, wobei der Bitumen mit SBS-Polymer modifiziert ist;
a2) nach Schritt a) und vor Schritt b) Aufbringen einer zweiten Grundierung aus kationischer Bitumenemulsion auf das Polymergitter (2), wobei der Bitumen mit SBS-Polymer modifiziert ist.

## Revendications

1. Revêtement de route thermorésistant comprenant une couche de surface (1) d'un béton d'asphalte poreux rempli avec un mortier de ciment, ladite couche étant couplée à une grille polymère (2), **caractérisé en ce que** des fibres polymères sont ajoutées audit mortier de ciment et **en ce que** ledit béton d'asphalte comprend un mélange de granulats de pierre comprenant :
- des granulats gros ayant une distribution granulométrique continue dans la plage entre 20 mm et 8 mm ;
- des granulats fins ayant une distribution granulométrique continue dans la plage entre 2 mm et 0,075 mm.

2. Revêtement selon la revendication 1, dans lequel les fibres polymères ont une longueur variable comprise entre 5 mm et 25 mm, un diamètre nominal minimum supérieur ou égal à 10 microns et un point de fusion non supérieur à 200°C.

3. Revêtement selon la revendication 1 ou 2, dans lequel les fibres polymères sont des fibres de polypropylène.

4. Revêtement selon l'une quelconque des revendications 1 à 3, dans lequel les fibres polymères sont présentes dans une quantité comprise entre 0,15 kg/m3 et 0,45 kg/m3 de mortier de ciment humide.

5. Revêtement selon l'une quelconque des revendications précédentes, **caractérisé en ce que** la couche de surface (1) a la composition suivante en volume : 20-30% de mortier de ciment avec fibres polymères ajoutées, 70-80% de béton d'asphalte hautement poreux et 1-3% d'espace vide.

6. Revêtement selon l'une quelconque des revendications précédentes, dans lequel le béton d'asphalte comprend des granulats avec un diamètre compris entre 8 mm et 2 mm.

7. Revêtement selon l'une quelconque des revendications précédentes, dans lequel la grille polymère (2) est une grille orthotropique avec raidissement par fibres de verre suivant une direction préférentielle.

8. Revêtement selon l'une quelconque des revendications précédentes, dans lequel la grille polymère (2) est une grille adhésive.

9. Procédé de fabrication d'un revêtement de route selon la revendication 1, comprenant les étapes opérationnelles suivantes :
a) l'application d'une grille polymère (2) sur une assiette de route ;
b) la fabrication d'une couche de béton d'asphalte hautement poreux sur ladite grille polymère (2), ledit béton d'asphalte comprenant un mélange de granulats de pierre comprenant :
- des granulats gros ayant une distribution granulométrique continue dans la plage entre 20 mm et 8 mm ;
- des granulats fins ayant une distribution granulométrique continue dans la plage entre 2 mm et 0,075 mm ;
c) le remplissage des pores dudit béton d'asphalte par injection d'un mortier de ciment additionné avec des fibres polymères formant une couche de surface (1) de béton d'asphalte rempli avec un mortier de ciment.

10. Procédé selon la revendication 9, dans lequel le mortier de ciment est un mortier de ciment avec des fibres polymères ajoutées ayant une longueur variable comprise entre 5 mm et 25 mm, un diamètre nominal minimum supérieur ou égal à 10 microns et un point de fusion non supérieur à 200°C.

11. Procédé selon la revendication 9 ou 10, comprenant, quand la grille polymère (2) n'est pas une grille adhésive, les autres étapes opérationnelles suivantes :
a1) avant l'étape a), l'application d'une première couche d'apprêt d'émulsion de bitume cationique sur l'assiette de route, dans laquelle le bitume est modifié au polymère SBS ;
a2) après l'étape a) et avant l'étape b), l'application d'une deuxième couche d'apprêt d'émulsion de bitume cationique sur la grille polymère (2), dans laquelle le bitume est modifié au polymère SBS.
